# EUROPEAN PATENT APPLICATION

(11) **EP 4 382 692 A1**
(43) Date of publication of application: **12.06.2024**
(21) Application number: 22852391.6
(22) Date of filing: 03.08.2022
(51) Int. Cl.: E04F 13/30, E04F 15/18, E04F 13/075

(54) **REVERSIBLE SYSTEM FOR INSTALLING PLATES OF DIFFERENT NATURES**

(30) Priority: 05.08.2021 ES 202100321 U
(71) Applicant: Global Magnetic System S.L., Valencia (ES)
(72) Inventor: BAYARRI BALLESTER, Rubén David, 12560 Benicasim (Castellón) (ES)
(74) Representative: Mendigutía Gómez, Maria Manuela
(86) International application number: PCT/ES2022/070520
(87) International publication number: WO 2023/012395

(57) **Abstract**

The magnetic ceramic tile project was aimed at developing a system for magnetically fastening a tile to a substrate and arose as a solution to the need in the ceramic tile industry to use new installation systems that offer greater versatility and fit in with the dynamics of a product that is increasingly identified with the concept of fashion. A permanently up-to-date image. What is the point of bringing a large number of designs to market only to be inconvenienced by invariably disruptive replacement work? It is much easier to have a removable installation system that allows ceramic tiles to be replaced without construction work and a constantly up-to-date image to be provided. Inconvenient construction work, a thing of the past. The various technologies applied to ceramic tiles generate a product with great advances in terms of design and finishes but which continues to use mortar as a bonding system. This obliges fixed installation with the same problem as always: construction work, synonymous with demolition, dust, rubble, noise, dirt and other nuisances that always question the advisability of changing the tiles. Gaining ground for ceramic tiles against the competition. Other materials are gaining popularity over ceramic tiles because they are much easier to replace and do not involve the problem of construction work. Vinyls, synthetic parquets, carpets and other similar products are increasingly entering the traditionally ceramic market, with their designs, finishes and textures evolving in line with fashion in the same way as those of ceramic tiles. However, these other materials have the advantage of simpler and cleaner assembly than masonry works. Additional uses and advantages Hotels, and the contract world in general, require frequent decoration changes and are the sectors most affected by replacement works, since, apart from the inconvenience caused, they reduce revenue. Using the new magnetic installation technology, all these problems can be eliminated, with economical, quick and clean installation being prioritised. Exhibition spaces, into which so much is invested, can become an area of significant savings while highlighting the new opportunities provided by the system. The technique also allows the incorporation of magnetically powered sensors, with information input, which make walls smart (utility model: smart walls). Similarly, any intervention can be carried out in a way that is minimally damaging to the tiling. An added economic advantage is that the ceramic tile, which can be easily installed and replaced without being damaged, can be included in equipment that can be financed through leasing, with the advantages that this entails. The system has many other advantages. A magnetic attraction. The system is based on the magnetism produced by a formulation of magnetite, ferrite and other minerals harmless to health. Magnetite has countless uses today, including in magnetic systems in the automotive industry, aeronautics, advertising, robotics, medicine and many other industries that use its properties to solve the need for permanent adherence free of deterioration or loss of qualities. It is important to differentiate the magnetic field without contraindications of magnetite and ferrite, from high-power industrial magnetic fields, such as those produced using neodymium magnets, which can indeed negatively affect both electronic devices and pacemakers. In this installation system, the magnetic field is exclusively restricted to the joint between the ceramic tile and the substrate and is confined to this area without its influence extending to the outside. In a word. The system is simple, functional and ecological. Assembly is perfect and does not require specialised labour. The same substrate can be used for successive design and format changes. The same base is used for an infinite number of changes. The many aspects and applications of magnetic fastening open up important prospects.

## Description

### Object and Field of the Invention

The present invention relates to a covering structure for walls and floors in which plates (tile, metal, stone, vinyl, carpet, wood, paper, glass) are affixed to a wall and/or floor surface by means of magnetic adhesion, so that the covering structure that comprises said plates has a layer of enamel with ferromagnetic adhesive properties for enabling the plates to be affixed to the wall and/or floor surface, which is also ferromagnetic, it being possible for the plates to be assembled and dismantled in a simple and easy manner, for example in order to exchange one for another in order and thus alter the decor without the need for masonry work.

### Technical Problem to be Solved, and Background of the Invention

Various wall and floor covering structures are currently known which comprise covering pieces, such as floor tiles and wall tiles, these covering pieces being joined to structural bases of the floor and/or wall using an adhesive material, mortar, or other materials.

Other covering structures for floors and walls are also known in which some covering pieces are joined to the structural bases of the floor and/or wall by means of a magnetic adhesion, all of this being disclosed in the patents with publication numbers: GB 2564104 A, US 2008202053 A1, US 2017254094 A1.

The covering structures described in the preceding paragraph, although very practical and relatively easy to install, in many cases do not provide the necessary soundproofing, waterproofing, and air conditioning, nor do they comply with the antistatic properties that are essential for preventing static electricity from building up in the dwelling.

### Description and Explanation of the Invention

In order to achieve the objects and avoid the drawbacks mentioned in the foregoing, the invention proposes a covering structure for walls and floors which comprises a high-density crosslinked ethylene acetate foam having soundproofing, waterproofing, and thermal and antistatic properties and plates with ferromagnetic enamel that are designed to adhere removably to the supports, also with ferromagnetic enamel, resulting in a magnetic adhesion of the two elements.

The acetate foam has pairs of first and second opposing faces, the first faces being configured to rest on a surface of a structural floor or wall base, while the second faces of the microgranulated agglomerate sheets are configured such that the ferromagnetic sheets sit on them.

Each of the plates comprises a visible face and a ferromagnetic enamel that is attached by means of a primer to the rear face of the decorative body. The support, likewise, has a ferromagnetic enamel that is adhered by means of a primer.

The acetate foam has a thickness of 4 mm, a density of 120 kg/m³ (ISO 845), a dynamic rigidity of 12 MN/m³ (ISO 1978), a compressive strength of 100 Kpa (EN 826), a thermal capacity of 0.240 Kcal/kg (EN12667), water absorption 0.00% (EN 1609), acoustic insulation 24 dB (UNE EN-ISO 140-8), impact noise insulation 58 dB (UNE EN-ISO 717-1), thermal resistance 0.028 m2 k/W (EN12667), antistatic effect +- 2 (EN14041).

The covering structure of the invention enables the plates to be affixed to walls and floors by means of magnetic adhesion, this magnetic system making is possible to perform quick and clean installations, both at the time of the initial installation and during subsequent replacement in which the plates that were installed are exchanged for new ones.

It should be noted that plates that include decorative bodies remain unchanged, maintaining their original appearance, both when they are installed and when they are dismantled or removed, allowing them to be reused and preventing them from breaking, unlike what occurs conventionally.

Therefore, the installation of the structure of the invention promotes environmental friendliness, since the avoidance of breakage also means that debris is also avoided, so that no toxic substances originating from the incineration process are released.

Annoying noise, dust, and the accumulation of waste are also avoided, both in the process of the installation and removal of the plates, without the use of tools, which results in enhanced worker safety.

Other features provided by the invention are soundproofing, waterproofing, and thermal and antistatic properties. Furthermore, due to its exceptional soundproofing, waterproofing, and thermal and antistatic properties, the covering structure of the invention can be used in all buildings: homes, offices, hotels, hospitals, restaurants, etc., thereby ensuring much higher levels of insulation than that provided for in the Spanish Technical Building Code (CTE).

The magnetic enamel that is bonded to the decorative body of the plates is composed of a polymer with ceramic ferrite particles which, in turn, impart fireproofing properties to the reinforcing meshes of the ceramic sheets.

The advantages of the base structure of the invention are as follows:
- It is easy to install, allowing for quick style changes, making it ideal for those areas in which immediate installation is required.
- It can be installed and stepped on at the same time, enabling workers from multiple trades, such as plumbers, electricians, carpenters, etc., to participate at the same time while the plates are being installed.
- The durability of the structure of the invention after it has been installed is perfect for use in high-traffic places such as hotels, airports, exhibition stands, stores, gyms, offices, shopping centers, hospitals, and offices, in addition to residential use.
- Makes it possible to quickly renew a floor or wall, imparting a fresh elegance to the space.
- It is suitable for use in high traffic areas.
- Quick and easy installation.
- The plates can be easily removed for reuse.
- Easy replacement of damaged plates.
- The support is not damaged during installation or removal.
- It can be stepped on immediately after placement.
- It has good shock and noise absorption.
- Easy maintenance and cleaning.

A single figure is appended hereto which is illustrative and non-limiting in nature, forms an integral part hereof, and represents the subject matter of the invention in order to facilitate a better understanding of the present description.

### Brief Description of the Figure

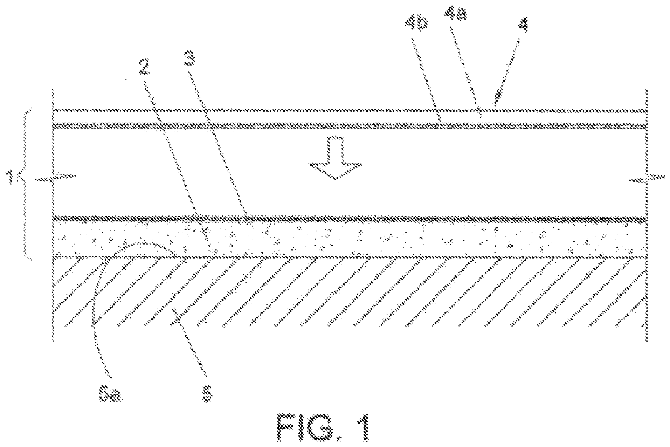

Fig 1 shows an exploded view of the wall and floor covering structure constituting the subject matter of the invention. In this figure, the application of the invention is on a floor surface.

### Description of an Exemplary Embodiment of the Invention

With reference to the numbering adopted in the figure, the covering structure 1 for walls and floors comprises a sheet of high-density crosslinked ethylene acetate foam 2, ferromagnetic enamel in a proportion of 500 g/m², and a plate 4 that is designed to adhere detachably to the ferromagnetic sheet 3.

To this end, each of the plates 4 comprises a decorative plate body 4a and a magnetic enamel 4b that is bonded to a first face of the decorative body 4a, which includes a second visible decorative face that is situated opposite the first face, the plate 4 being affixed to the ferromagnetic supports 3 by means of the ferromagnetic enamel 4b that is bonded to the plate 4.

High-density crosslinked ethylene acetate foam sheets 2 have pairs of first and second opposing faces. The first faces are designed to rest on a surface 5a of a structural base 5 of floor or wall, while the second faces of the sheets of high-density crosslinked ethylene acetate foam 2 are configured such that the ferromagnetic sheets 3 sit on them.

The decorative body 4a of the plate 4 can be made of ceramic, porcelain, vinyl, wood, carpet, paper, glass, etc.

The ferromagnetic enamel 4b is adhered to the decorative body 4a of the plate 4 by means of a primer that is applied using any of various systems, whether by spray, airless, injection, roller, line, or hood, immediately cohering with the plate.

It should be noted that each sheet of high-density crosslinked ethylene acetate foam 2 has a thickness of 4 millimeters, while it is a sheet with soundproofing, waterproofing, and thermal and antistatic properties.

High-density crosslinked ethylene acetate sheets 2 offer the advantage of being able to replace conventional insulation systems between walls of different rooms which, until now, have usually been installed through insertion of insulating sheets.

The application of high-density crosslinked ethylene acetate sheets 2 provides a significant advantage over any other conventional wall/floor acoustic insulation system, as it offers soundproofing, waterproofing, and thermal and antistatic properties.

## Claims

1. The reversible system for installing plates of different natures is **characterized in that**:
- it comprises sheets of high-density crosslinked ethylene acetate foam that impart soundproofing, waterproofing, and thermal and antistatic properties to the system.
A ferromagnetic enamel (3) and plates (4), such as ceramic plates, vinyl, carpet, stone, wood, paper, glass, etc., that are designed to adhere removably to the ferromagnetic supports (3) by means of a magnetic adhesion.
- the high-density crosslinked ethylene acetate foam sheets (2) have pairs of first and second opposing faces, the first faces being configured to rest on a surface (5a) of a structural floor or wall base (5), while the second faces of the high-density crosslinked ethylene acetate foam sheets (2) are configured such that the ferromagnetic sheets (3) sit on them.

2. The reversible system for installing plates of different natures according to claim 1, **characterized in that** each of the plates (4) comprises a decorative body (4a) and a ferromagnetic enamel (4b) that is bonded to a first face of the decorative body (4a), which includes a second decorative face that is situated opposite the first face, the plates (4) being affixed on top of the ferromagnetic sheets or surfaces (3) via the ferromagnetic enamel (4b) that is bonded to the decorative body (4a) of the plates (4).

3. The reversible system for installing plates of different nature according to any one of the previous claims, **characterized in that** the ferromagnetic enamel (3) provides an improvement in the shearing motion of the plate.

4. The reversible system for installing plates of different natures according to claim 2, **characterized in that** the magnetic sheet (4b) is made of magnetized rubber material.

5. The reversible system for installing plates of different natures according to previous claims, **characterized in that** the high-density crosslinked ethylene acetate foam sheets have soundproofing, waterproofing, and thermal and antistatic properties.

6. The reversible system for installing plates of different natures according to any one of the previous claims, **characterized in that** the sheets of high-density crosslinked ethylene acetate have a thickness of 4 millimeters with the characteristic of absorbing the irregularities of the substrate. That is, the lower part of the acetate sheet corrects the imperfections of the substrate, maintaining proper planimetry on its surface for the perfect seating of the plates.
